# EUROPEAN PATENT APPLICATION

(11) **EP 1 571 124 A1**
(43) Date of publication of application: **07.09.2005**
(21) Application number: 05101637.6
(22) Date of filing: 03.03.2005
(51) Int. Cl.: C01B 3/48, C01B 3/38, B01J 19/24, H01M 8/06

(54) **FUEL CELL SYSTEM AND REFORMER THEREFOR**

(30) Priority: 03.03.2004 KR 2004014254
(71) Applicant: Samsung SDI Co., Ltd., Gyeonggi-do (KR)
(72) Inventor: Kim, Ju-Yong, Kyeonggi-Do (KR); Lee, Dong-Hun, Kyeonggi-Do (KR); Kweon, Ho-Jin, Kyeonggi-Do (KR)
(74) Representative: Hengelhaupt, Jürgen

(57) **Abstract**

A fuel cell system includes a stack (10) for generating electrical energy by a reaction of the hydrogen and oxygen, a reformer (30) for generating hydrogen gas from fuel through a chemical catalytic reaction by thermal energy, a fuel supply (50) assembly for supplying fuel to the reformer, and an air supply assembly (70) for supplying air to the reformer and the stack. The reformer includes a plurality of reactors having a channel, respectively, and being stacked.

## Description

### FIELD OF THE INVENTION

The present invention relates to a fuel cell system and, more particularly, to a reformer for a fuel cell system.

### BACKGROUND OF THE INVENTION

A fuel cell is a system for producing electric power by generating electric energy through an electrochemical reaction of oxygen and hydrogen contained in hydrocarbon-group materials, such as methanol, ethanol and natural gas.

A polymer electrolyte membrane fuel cell (PEMFC) has been developed recently. The PEMFC has excellent output characteristics, a low operating temperature, and fast starting and response characteristics. The PEMFC may be used as a power source for vehicles, in homes and in buildings, and in electronic devices. The PEMFC, therefore, has a wide range of applications.

The components of the PEMFC are a stack, reformer, fuel tank, and fuel pump. The stack forms an aggregate of a plurality of unit fuel cells. The fuel pump supplies fuel in the fuel tank to the reformer. The reformer reforms the fuel to create hydrogen gas, and supplies the hydrogen gas to the stack.

The reformer generates hydrogen gas from fuel through a chemical catalytic reaction by thermal energy. It has a thermal source assembly for generating thermal energy, a reforming reactor for absorbing the thermal energy and generating hydrogen gas from the fuel, and a carbon monoxide reduction assembly for performing a reduction of the concentration of carbon monoxide contained in the hydrogen gas.

However, in the reformer of the conventional fuel cell system, the thermal source assembly, the reforming reactor, and the carbon monoxide reduction assembly are formed in a vessel type, and are interconnected to each other by pipes. Therefore, heat exchange between the reactors is not directly performed resulting in inefficient heat exchange.

Further, since the reactors are spatially separated, the entire fuel cell system cannot be made compact, and since the connection structure of pipes is complicated, the overall performance of the system is lowered.

### SUMMARY OF THE INVENTION

There is provided a reformer and a fuel cell system with the reformer which can improve the performance and efficiency of the entire system with a simpler structure.

According to one aspect of the present invention, a reformer for a fuel cell system comprises a plurality of reactors having a channel, respectively, and being stacked.

The channels of the reactors can partially form one path.

The reactors can be formed with a thermal conductor.

The reactors can be formed in a plate type.

The reactors include a first reactor generating thermal energy by an oxidation catalytic reaction of fuel and air; a second reactor vaporizing fuel by the thermal energy generated from the first reactor; a third reactor generating hydrogen gas by a reforming catalytic reaction of the fuel vaporized in the second reactor; a fourth reactor performing a primary reduction of a concentration of carbon monoxide contained in the hydrogen gas; and a fifth reactor performing a secondary reduction of a concentration of carbon monoxide contained in the hydrogen gas.

The first reactor is positioned in the center, and the third reactor and the fourth reactor are stacked on the upper side of the first reactor, and the second reactor and the fifth reactor are stacked on the lower side of the first reactor.

The reformer further includes a cover assembled with the fourth reactor.

The first reactor includes a first body; a first channel formed on the upper surface of the first body and having a start end and a finish end; an intake hole formed in the start end of the first channel; an exhaust hole formed in the finish end of the first channel; and a first and a second passage holes formed in the area of the exhaust hole.

The second reactor includes a second body; a second channel formed on the upper surface of the second body and having a start end and a finish end; an intake hole formed in the start end of the second channel; a third passage hole communicated with the first passage hole; and a first groove formed in the finish end of the second channel and communicated with the second passage hole.

The third reactor includes a third body; a third channel formed on the upper surface of the third body and having a start end and a finish end; a fourth passage hole formed in the start end of the third channel and communicated with the second passage hole; a second groove formed in the finish end of the third channel; and a fifth passage hole communicated with the first passage hole.

The fourth reactor includes a fourth body; a fourth channel formed on the upper surface of the fourth body and having a start end and a finish end; a seventh passage hole formed in the start end of the fourth channel and communicated with the fifth passage hole; and a sixth passage hole formed in the finish end of the fourth channel and communicated with the second groove.

The fifth reactor includes a fifth body; a fifth channel formed on the upper surface of the fifth body and having a start end and a finish end; an intake hole formed in the start end of the fifth channel; and an exhaust hole formed in the finish end of the fifth channel.

The reactors include a thermal energy generator creating thermal energy by an oxidation catalytic reaction of fuel and air; and a hydrogen gas generator creating hydrogen gas by receiving fuel separately from the thermal energy generator and absorbing heat created by the thermal energy generator to generate hydrogen gas.

In another aspect, a fuel cell system comprises a stack for generating electrical energy by a reaction of hydrogen and oxygen; a reformer for generating hydrogen gas from fuel through a chemical catalytic reaction by thermal energy; a fuel supply assembly for supplying fuel to the reformer; and an air supply assembly for supplying air to the reformer and the stack, wherein the reformer includes a plurality of reactors having a channel, respectively, and being stacked.

### BRIEF DESCRIPTION OF THE DRAWINGS

Fig. 1 is a schematic view of a fuel cell system according to a first exemplary embodiment of the present invention.

Fig. 2 is an exploded perspective view of the stack of Fig. 1.

Fig. 3 is an exploded perspective view of the reformer according to the first exemplary embodiment of the present invention.

Fig. 4 is an assembled perspective view of the reformer of Fig. 3.

Fig. 5 is an exploded perspective view of a reformer according to a second exemplary embodiment of the present invention.

Figs. 6 and 7 are exploded perspective views of a reformer according to the second embodiment of the present invention, illustrating variations thereof.

### DETAILED DESCRIPTION

Reference will now be made in detail to the embodiments of the present invention, examples of which are illustrated in the accompanying drawings, wherein like reference numerals refer to the like elements throughout.

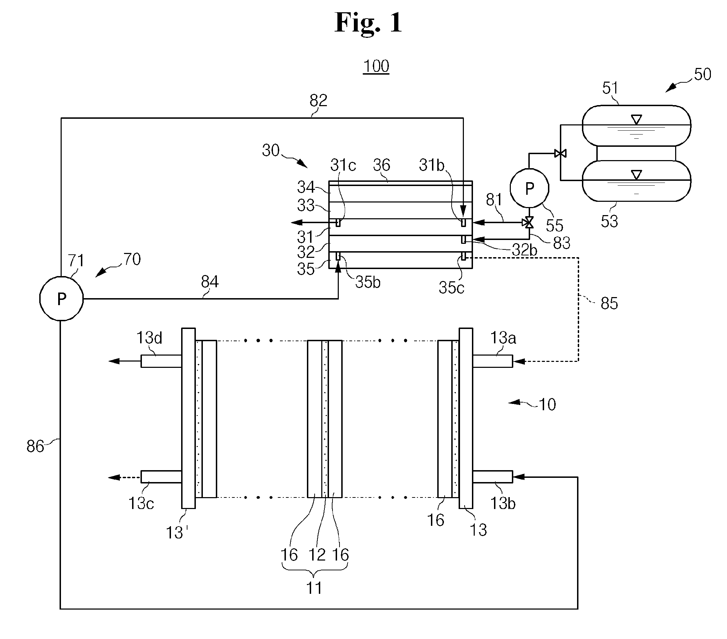

Referring to the first exemplary embodiment shown in Fig. 1, in the fuel system 100 a polymer electrode membrane fuel cell (PEMFC) method is used in which hydrogen gas is generated by reforming fuel containing hydrogen, and electrical energy is generated by an electrochemical reaction of the hydrogen gas and oxidation gas.

In the fuel system 100, fuel for generating electricity is taken to include liquid or gas fuel containing hydrogen such as methanol, ethanol, or natural gas. In the following exemplary embodiments, the fuel used is in liquid form, and mixed fuel is understood to be the liquid fuel mixed with water.

Further, in the fuel cell system 100, oxidant gas to react with hydrogen gas may be oxygen gas stored in a separate storage container, or it may simply be air containing oxygen. In the following exemplary embodiments air containing oxygen is used.

The fuel cell system 100 in accordance with the present invention includes a stack 10 for generating electrical energy through an electrochemical reaction of hydrogen and oxygen, a reformer 30 for generating hydrogen gas from the fuel and supplying the hydrogen gas to the stack 10, a fuel supply assembly 50 for supplying the fuel to the reformer 30, and an oxygen supply assembly 70 for supplying air to the reformer 30 and the stack 10, respectively.

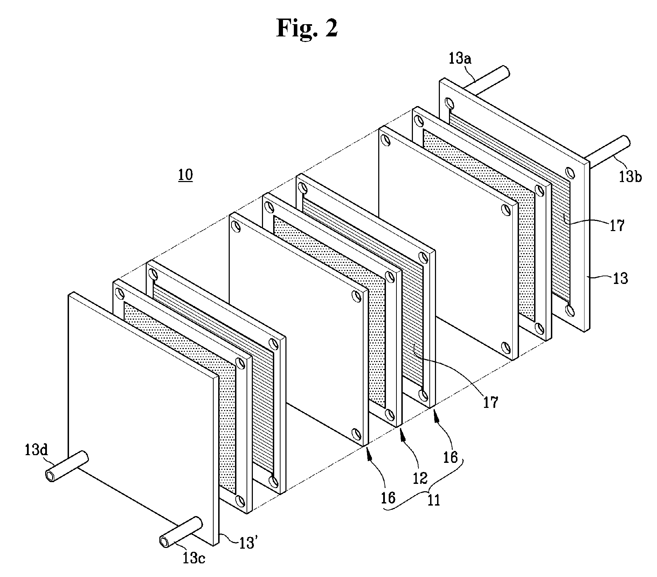

Fig. 2 is an exploded perspective view of the stack of Fig. 1, and the stack of the present invention has an electricity generator aggregately formed by continuously arranging a plurality of electricity generators 11.

The electricity generator 11 forms a unit fuel cell realized with a membrane electrode assembly (MEA) 12 at its center and separators 16 (also known as bipolar plates) provided on both sides thereof.

The MEA 12 has an active region 17 with a predetermined area where an electrochemical reaction of hydrogen and oxygen is performed, and it has an anode electrode on one surface, a cathode electrode on the other surface, and an electrolyte layer interposed between those two electrodes.

The anode electrode effects an oxidation reaction of hydrogen to convert to hydrogen ions (proton) and electrons. The cathode electrode effects a reduction reaction of the hydrogen ions and oxygen to generate water and heat with a predetermined temperature. The electrolyte layer moves the hydrogen ions generated in the anode electrode to the cathode electrode to exchange ions.

The separators 16 acts as a supplier of hydrogen and oxygen to both sides of the MEA 12, and also functions as a conductor for connecting the anode electrode and cathode electrode in series.

Additionally, separate pressing together plates 13, 13' can be mounted to outermost layers of the stack 10 to press a plurality of the electricity generators 11 together, making close contact therebetween. However, in the stack 10 of the exemplary embodiments of present invention, separators 16 positioned in the outermost layers of the electricity generator 11 may be used in place of the pressing plates 13, 13', in which case the pressing plates are not included in the configuration. When the pressing plates 13 are used, they may have a function of the separators 16 mentioned above in addition to that of pressing together the plurality of electricity generators 11, as seen in the exemplary embodiment of FIG. 2.

One pressing plate 13 of the pressing plates 13, 13' includes a first infusion member 13a for supplying hydrogen gas to the electricity generator 11, and a second infusion member 13b for supplying air to the electricity generator 11. The other pressing plate 13' includes a first discharge member 13c for exhausting hydrogen gas remaining after a reaction in the electricity generator 11, and a second discharge member 13d for exhausting water generated by a combination reaction of hydrogen and oxygen in the electricity generator 11, and air remaining after a reaction with hydrogen. The second infusion member 13b may be connected to the air supply assembly 70 through a sixth supply line 86.

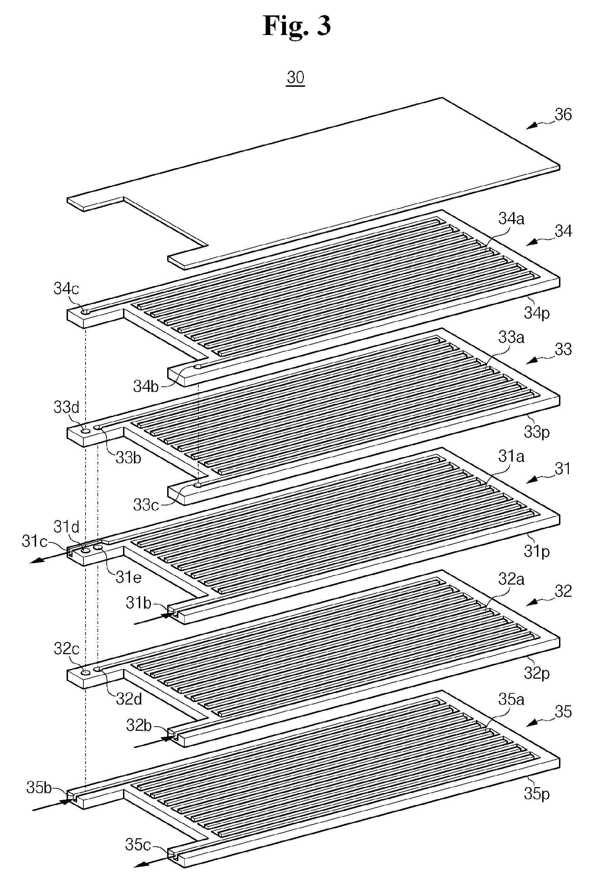

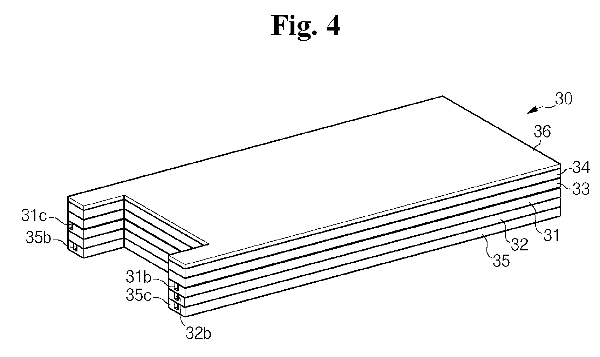

In this embodiment, the reformer 30 generates hydrogen gas from fuel containing hydrogen through a chemical catalytic reaction by thermal energy, and reduces the concentration of carbon monoxide contained in the hydrogen gas. The structure of the reformer 30 will be further explained later with reference to Fig. 3 and Fig. 4.

Referring again to FIG. 1, the fuel supply assembly 50 for supplying fuel to the reformer 30 includes a first tank 51 for storing liquid fuel, a second tank 53 for storing water, and a fuel pump 55 connected to the first tank 51 and the second tank 53 for discharging the liquid fuel and water from the respective first tank 51 and second tank 53.

The air supply assembly 70 includes an air pump 71 for performing the intake of air using a predetermined pumping force and supplying the air to the electricity generator 11 of the stack 10 and the reformer 30, respectively. In this embodiment, the air supply assembly 70, as shown in the drawing, has a structure such that air is supplied to the stack 10 and the reformer 30 through one air pump 71, but it is not limited thereto. For example, a pair of air pumps can be provided to be connected to the stack 10 and the reformer 30, respectively.

When the system 100 of the present invention supplies hydrogen gas generated from the reformer 30 to the stack 10, and supplies air to the stack 10 through the air pump 71, the stack 10 generates a predetermined amount of electrical energy, water and heat through an electrochemical reaction of hydrogen and oxygen.

The driving of the fuel cell system 100, for example, operation of the fuel supply assembly 50, the air supply assembly 70, etc., cna be controlled by a general control unit (not shown) of a microcomputer type which is separately provided.

The structure of the reformer 30 will now be explained below in more detail.

Fig. 3 is an exploded perspective view of the reformer according to the first exemplary embodiment of the present invention, and Fig. 4 is an assembled perspective view of the reformer of Fig. 3.

With reference to the drawings, in the exemplary embodiment, the reformer 30 includes a plurality of reactors 31, 32, 33, 34, 35 that are stacked, and that generate thermal energy through an oxidation catalytic reaction of fuel and air, generate hydrogen gas from mixed fuel through various catalytic reactions by the thermal energy, and reduce the concentration of carbon monoxide contained in the hydrogen gas.

In more detail, the reformer 30 includes a first reactor 31 for generating thermal energy, a second reactor 32 for vaporizing mixed fuel by the thermal energy, a third reactor 33 for generating hydrogen gas from the vaporized mixed fuel through a steam reforming (SR) catalytic reaction, a fourth reactor 34 for performing a primary reduction of the concentration of carbon monoxide contained in the hydrogen gas through a water-gas shift (WGS) catalytic reaction of the hydrogen gas, and a fifth reactor 35 for performing a secondary reduction of the concentration of carbon monoxide contained in the hydrogen gas through a preferential CO oxidation (PROX) catalytic reaction of the hydrogen gas and air.

In the exemplary embodiment, the reformer 30 is structured such that the first reactor 31 is positioned in the center, the third reactor 33 and the fourth reactor 34 are sequentially stacked on the upper side of the first reactor 31, and the second reactor 32 and the fifth reactor 35 are sequentially stacked on the lower side of the first reactor 31. Each of the reactors has a channel which allows fuel, air, hydrogen gas, etc., to flow, and means for connecting each channel to each other. The detailed explanation of each reactor will be given below.

Further, a cover 36 may be mounted on a side of the fourth reactor 34 remote from the reformer 30. The first through fifth reactors 31, 32, 33, 34, 35 may be in the form of quadrilateral plates having a predetermined length and width, and may be formed of a metal having thermal conductivity, such as aluminum, copper and steel.

The first reactor 31 is a heating element that generates thermal energy required for reforming fuel, and pre-heats the entire reformer 30. The first reactor 31 performs combustion of fuel and air by an oxidation catalytic reaction.

The first reactor 31 includes a first body 31 p in the form of a quadrilateral plate. A first flow channel 31 a is formed in the first body 31 p to enable the flow of fuel and air. The first flow channel 31a has a start end and a finish end, and is formed on the upper side of the first body 31 p. Further, a catalyst layer (not shown) is formed on the inner surface of the first flow channel 31a for accelerating the oxidation reaction of fuel and air.

Further, a first intake hole 31b is formed in the first body 31p to supply fuel and air to the first flow channel 31 a. A first exhaust hole 31 c is also formed in the first body 31 p to exhaust combusted gas generated by combusting fuel and air through the first flow channel 31 a. The first intake hole 31 b is formed in the start end of the first flow channel 31a, and the first exhaust hole 31c is formed in the finish end of the first flow channel 31a. Further, a first passage hole 31d and a second passage hole 31e are formed in the area of the first exhaust hole 31c.

The first intake hole 31 b can be connected to the first tank 51 of the fuel supply assembly 50 through a first supply line 81 and to the air pump 71 of the oxygen supply assembly 70 through a second supply line 82 (See Fig. 1).

The second reactor 32 receives the supply of mixed fuel from the fuel supply assembly 50, and the second reactor 32 receives thermal energy from the first reactor 31 to vaporize the mixed fuel.

The second reactor 32 includes a second body 32p in the form of a quadrilateral plate. A second flow channel 32a is formed in the second body 32p to enable the flow of mixed fuel. The second flow channel 32a has a start end and a finish end, and is formed on the upper side of the second body 32p. A catalyst layer (not shown) is formed on the inner surface of the second flow channel 32a for accelerating the vaporization of the mixed fuel.

Further, a second intake hole 32b is formed in the second body 32p to supply mixed fuel to the second flow channel 32a. The second intake hole 32b is formed in the start end of the second flow channel 32a. In addition, a third passage hole 32c communicating with the first passage hole 31d of the first reactor 31 is formed in the second body 32p, and a first groove 32d communicating with the second passage hole 31e is formed in the finish end of the second flow channel 32a.

The second intake hole 32b can be connected to the first tank 51 and the second tank 52 of the fuel supply assembly 50 through a third supply line 83 (See Fig. 1).

The third reactor 33 generates hydrogen gas from the vaporized mixed fuel of the second reactor 32 through a steam reforming catalytic reaction.

The third reactor 33 includes a third body 33p in the form of a quadrilateral plate. A third flow channel 33a is formed in the third body 33p to enable the flow of the vaporized mixed fuel. The third flow channel 33a has a start end and a finish end, and is formed on a side of the third body 33p. Further, a catalyst layer (not shown) is formed on the inner surface of the third flow channel 33a for accelerating a reforming reaction of the vaporized mixed fuel.

In order to enable the reception of vaporized mixed fuel from the second reactor 32, the third body 33p has a fourth passage hole 33b formed in the start end of the third flow channel 33a for communicating with the second passage hole 31e of the first reactor 31, a second groove 33c formed in the finish end of the third flow channel 33a, and a fifth passage hole 33d communicating with the first passage hole 31 d of the first reactor 31.

The fourth reactor 34 generates additional hydrogen gas through a water-gas shift catalytic reaction of hydrogen gas generated by the third reactor 33, and performs a primary reduction of the concentration of carbon monoxide contained in the hydrogen gas.

The fourth reactor 34 includes a fourth body 34p in the form of a quadrilateral plate. A fourth flow channel 34a is formed in the fourth body 34p to enable the flow of the hydrogen gas. The fourth flow channel 34a has a start end and a finish end, and is formed on the upper side of the fourth body 34p. Further, a catalyst layer (not shown) is formed in the fourth flow channel 34a for accelerating the water-gas shift reaction.

Further, the fourth reactor 34 has a sixth passage hole 34b formed in the start end of the fourth flow channel 34a for communicating with the second groove 33c of the third reactor 33, and a seventh passage hole 34c formed in the finish end of the fourth flow channel 34a for communicating with the fifth passage hole 33d of the third reactor 33.

The fifth reactor 35 performs a secondary reduction of the concentration of carbon monoxide contained in the hydrogen gas through a preferential CO oxidation (PROX) catalytic reaction of air and hydrogen gas generated in the fourth reactor 34.

The fifth reactor 35 includes a fifth body 35p in the form of a quadrilateral plate. A fifth flow channel 35a is formed in the fifth body 35p to enable the flow of the hydrogen gas generated in the fourth reactor 34. The fifth flow channel 35a has a start end and a finish end, and is formed on the upper side of the fifth body 35p. A catalyst layer (not shown) is formed in the fifth flow channel 35a for accelerating the above a preferential CO oxidation reaction.

Further, the fifth body 35p has a third intake hole 35b for supplying air to the fifth flow channel 35a, and a second exhaust hole 35c for exhausting the hydrogen gas the concentration of carbon monoxide of which is reduced through the fifth flow channel 35a. The third intake hole 35b is formed in the start end of the fifth flow channel 35a, and the second exhaust hole 35c is formed in the finish end of the fifth flow channel 35a.

The third intake hole 35b can be connected to the air pump 71 of the air supply assembly 70 through a fourth supply line 73. The second exhaust hole 35c can be connected to the first infusion member 13a of the stack 10 through a fifth supply line 85 (See Fig. 1).

When the reactors 31, 32, 33, 34, 35 are stacked, the first passage hole 31d, the third passage hole 32c, the fifth passage hole 33d, the seventh passage hole 34c and the third intake hole 35b are arranged to communicate one another. Further, the second passage hole 31e, the fourth passage hole 33b and the first groove 32d are arranged to communicate one another. The sixth passage hole 34b and the second groove 33c are also arranged to communicate each other. These arrangements enable the reactors 31, 32, 33, 34, 35 to partially connect their own channels as one path (from the second reactor to the fifth reactor). In this embodiment, the path is formed through a passage hole or groove formed on each reactor, but its structure is not limited to the above.

The operation of the fuel cell system according to the exemplary embodiment with the above structure will now be described.

The fuel pump 55 is operated such that the liquid fuel stored in the first tank 51 is supplied to the first reactor 31 through the first supply line 81. At the same time, the air pump 71 is operated such that air is supplied to the first intake hole 31 b of the first reactor 31 through the second supply line 82.

Next, the fuel and air move through the first flow channel 31a of the first reactor 31 to effect an oxidation catalytic reaction. Therefore, the first reactor 31 generates thermal energy with a predetermined temperature range by combusting the fuel and air through an oxidation reaction of the fuel and air.

Accordingly, the thermal energy generated in the first reactor 31 is transmitted to the second reactor 32, the third reactor 33, the fourth reactor 34 and the fifth reactor 35 to pre-heat the entire reformer 30.

After completion of pre-heating of the reformer 30 in this manner, the fuel pump 55 is operated such that the fuel stored in the first tank 51 and the water stored in the second tank 53 are supplied to the second intake hole 32b of the second reactor 32 through the third supply line 83.

Following the above operation, the mixed fuel of fuel and water is evaporated while flowing through the second flow channel 32a of the second reactor 32. The vaporized mixed fuel passes sequentially through the first groove 32d of the second reactor 32, the second passage hole 31e of the first reactor 31, and the fourth passage hole 33b of the third reactor 33 to thereby flow through the third flow channel 33a of the third reactor 33.

As a result, the third reactor 33 generates hydrogen gas from the mixed fuel through a steam reforming catalytic reaction. However, during this process, it is difficult for the third reactor 33 to fully effect the reforming catalytic reaction so that hydrogen gas containing a small amount of carbon monoxide as a secondary production material is generated

Next, the hydrogen gas is supplied to the fourth reactor 34 through the second groove 33c of the third reactor 33 and the sixth passage hole 34b of the fourth reactor 34. The hydrogen gas flows along the fourth flow channel 34a of the fourth reactor 34.

As a result, the fourth reactor 34 generates additional hydrogen gas by a water-gas shift catalytic reaction of the hydrogen gas, and performs a primary reduction of the concentration of carbon monoxide contained in the hydrogen gas.

Subsequently, the hydrogen gas is supplied to the fifth reactor 35. That is, the hydrogen gas flows to the fifth flow channel 35a of the fifth reactor 35 through the seventh passage hole 34c of the fourth reactor 34, the fifth passage hole 33d of the third reactor 33, the first passage hole 31 d of the first reactor 31, and the third passage hole 32c of the second reactor 32

At the same time, the air pump 71 is operated such that air is injected into the fifth reactor 35 through the fourth supply line 84. As a result, the fifth reactor 35 performs a secondary reduction of the concentration of carbon monoxide contained in the hydrogen gas through a preferential CO oxidation catalytic reaction. The hydrogen gas, the concentration of carbon monoxide of which is reduced, is exhausted through the second exhaust hole 35c of the fifth reactor 35.

Next, the hydrogen gas is supplied to the first infusion member 13a of the stack 10 through the fifth supply line 85. Simultaneously, the air pump 71 is operated such that air is supplied to the second infusion member 13b of the stack 10 via the sixth supply line 86.

Therefore, the hydrogen gas is supplied to the anode electrodes of the MEAs 12 via the separators 16 of the electricity generators 11. Further, the air is supplied to the cathode electrodes of the MEAs 12 via the separators 16 of the electricity generators 11.

Accordingly, the hydrogen gas is resolved into electrons and protons (hydrogen ions) by an oxidation reaction of hydrogen at the anode electrodes. Further, the protons move to the cathode electrodes through the electrolyte layers of the MEAs 12, and since the electrons are unable to pass through the electrolyte layers, they move to the adjacent cathode electrodes of the MEAs 12 through the separators 16 or separate terminals (not shown). The flow of the electrons during this operation creates a current. Further, water and heat with a predetermined temperature are generated at the cathode electrodes by a reduction reaction of oxygen contained in the air and the hydrogen ions moved to the cathode electrodes through the electrolyte layers.

Accordingly, by the process described above, the fuel cell system 100 of the present invention provides electrical energy of a predetermined output power with an apparatus, for example, notebooks, portable electronic devices such as PDA, or mobile communication terminal devices

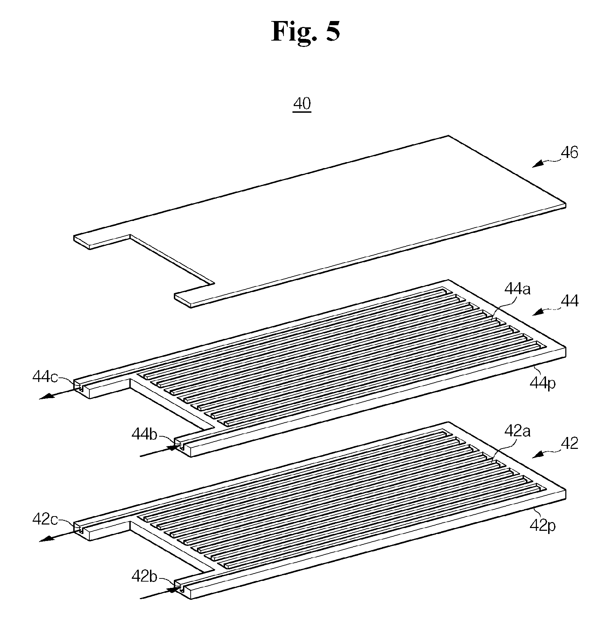

Fig. 5 is an exploded perspective view of a reformer according to a second exemplary embodiment of the present invention. The reformer 40 includes a plurality of reactors that are stacked as the reformer of the embodiment described above.

In this embodiment, the reformer 40 has a thermal energy generator 42 corresponding to the first reactor of the above embodiment, and a hydrogen gas generator 44 corresponding to the third reactor of the above embodiment.

The thermal energy generator 42 and the hydrogen gas generator 44 are stacked to form the reformer 40 in the same manner as the reactors described above. In this embodiment, the hydrogen gas generator 44 is arranged over the thermal energy generator 42, and a cover 46 to be assembled with the hydrogen gas generator 44 is arranged over the hydrogen gas generator 44.

Further, the thermal energy generator 42 and the hydrogen gas generator 44 are in the form of plates in the same manner as the reactors of the above embodiments, and each of them has a body 42p, 44p where channel 42a, 44a is formed.

The body 42p, 44p has an intake hole 42b, 44b at the start end, and an exhaust hole 42c, 44c at the finish end.

Further, a catalyst layer (not shown) is formed on the channel 42a of the thermal energy generator 42 for accelerating an oxidation reaction of fuel and air, and a catalyst layer (not shown) is formed on the channel of the hydrogen gas generator 44 for accelerating a reforming reaction of mixed fuel.

When the thermal energy generator 42 receives fuel and air through its intake hole 42b, the reformer 40 with the above structure generates thermal energy with a predetermined temperature range by combusting them through an oxidation reaction. The temperature range is maintained to immediately evaporate mixed fuel of water and fuel supplied to the hydrogen gas generator 44 when the mixed fuel passes through the hydrogen gas generator 44.

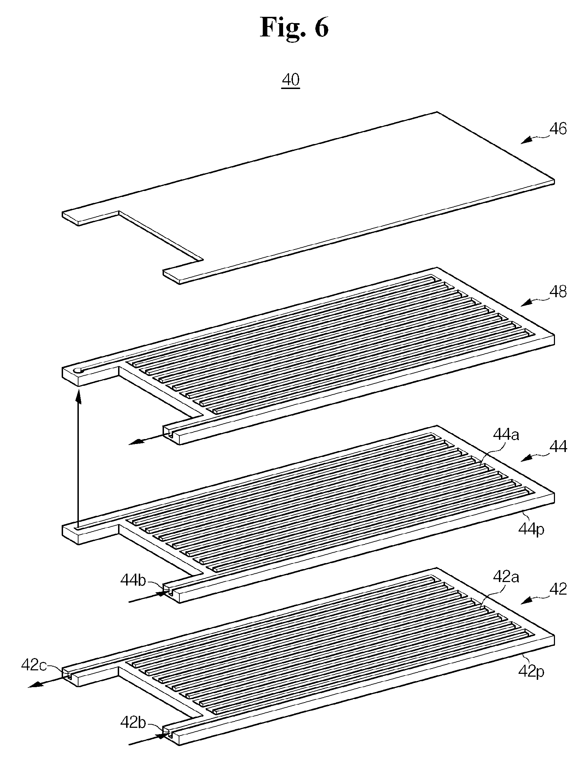

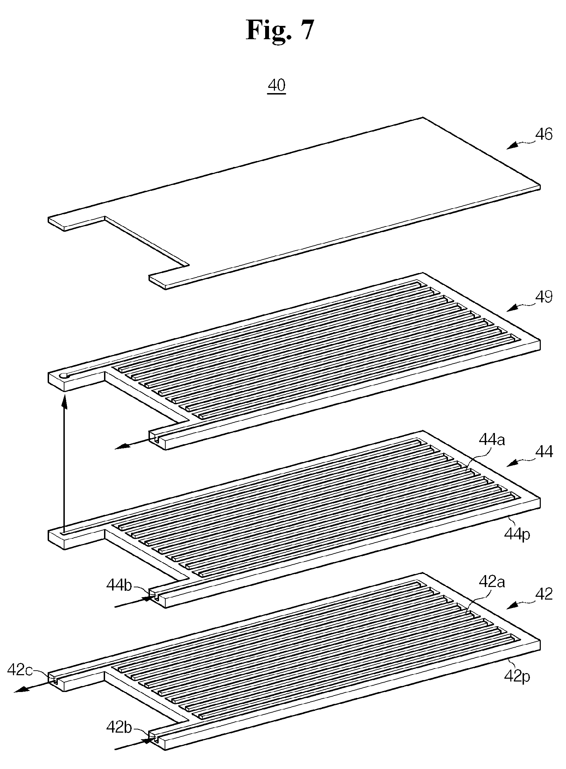

If the hydrogen gas generator 44 receives mixed fuel of water and fuel through its intake hole 44a, it generates hydrogen gas from the mixed fuel through a steam reforming catalytic reaction while evaporating the mixed fuel by the thermal energy generated from the thermal energy generator 42. The hydrogen gas is supplied to the stack through the exhaust hole 44c of the hydrogen gas generator 44. Alternatively, the reformer 40 can have a reactor 48, 49 adapted to perform a reduction of a concentration of carbon monoxide contained in the hydrogen gas corresponding to the forth reactor or the fifth reactor of the above embodiment, as shown Figs. 6 and 7.

That is, in this embodiment, although the reformer is formed by stacking the thermal energy generator and the hydrogen gas generator, the elements for the reformer are minimized. Accordingly, it provides more structural advantages.

As described above, the fuel cell system of the present invention has a structure such that the efficiency of the reformer and the performance of the entire system are improved by stacking each reactor.

Further, since the present invention can simplify the structure of the reformer, the entire system can be made more compact, and thereby the performance of the reformer can also be enhanced.

While the invention has been described in connection with certain exemplary embodiments, it is to be understood by those skilled in the art that the invention is not limited to the disclosed embodiments, but, on the contrary, is intended to cover various modifications included within the spirit and scope of the appended claims and equivalents thereof.

## Claims

1. A reformer for a fuel cell system comprising a plurality of reactors, each having a respective channel and being stacked together.

2. The reformer for a fuel cell system of claim 1, wherein respective channels of the reactors partially form one path.

3. The reformer for a fuel cell system of claim 1, wherein the reactors are formed with a thermal conductor.

4. The reformer for a fuel cell system of claim 1, wherein the reactors are formed in a plate type.

5. The reformer for a fuel cell system of claim 1, wherein the reactors includes:
a thermal energy generator creating thermal energy by an oxidation catalytic reaction of fuel and air; and
a hydrogen gas generator creating hydrogen gas by receiving fuel separately from the thermal energy generator and absorbing heat created by the thermal energy generator to generate hydrogen gas.

6. The reformer for a fuel cell system of claim 5, wherein the hydrogen gas generator is arranged over the thermal energy generator.

7. The reformer for a fuel cell system of claim 6, further comprising a cover assembled with the hydrogen gas generator.

8. The reformer for a fuel cell system of claim 5, further comprising a reactor adapted to perform a reduction of a concentration of carbon monoxide contained in the hydrogen gas.

9. The reformer for a fuel cell system of claim 2, wherein the reactors include:
a first reactor adapted to generate thermal energy by an oxidation catalytic reaction of fuel and air;
a second reactor adapted to vaporize fuel by the thermal energy generated from the first reactor;
a third reactor adapted to generate hydrogen gas by a reforming catalytic reaction of the fuel vaporized in the second reactor;
a fourth reactor adapted to perform a primary reduction of a concentration of carbon monoxide contained in the hydrogen gas; and
a fifth reactor adapted to perform a secondary reduction of a concentration of carbon monoxide contained in the hydrogen gas.

10. The reformer for a fuel cell system of claim 9, wherein the first reactor is positioned in the center, and the third reactor and the fourth reactor are stacked on the upper side of the first reactor, and the second reactor and the fifth reactor are stacked on the lower side of the first reactor.

11. The reformer for a fuel cell system of claim 10, further comprising a cover assembled with the fourth reactor.

12. The reformer for a fuel cell system of claim 9, wherein the first reactor includes:
a first body;
a first channel formed on an upper surface of the first body and having a first channel start end and a first channel finish end;
an intake hole formed in the first channel start end;
an exhaust hole formed in the first channel finish end; and
a first passage hole and a second passage hole formed in the area of the exhaust hole.

13. The reformer for a fuel cell system of claim 12, wherein the second reactor includes:
a second body;
a second channel formed on an upper surface of the second body and having a second channel start end and a second channel finish end;
an intake hole formed in the second channel start end;
a third passage hole communicated with the first passage hole; and
a first groove formed in the second channel finish end and communicated with the second passage hole.

14. The reformer for a fuel cell system of claim 12, wherein the third reactor includes:
a third body;
a third channel formed on an upper surface of the third body and having a third channel start end and a third channel finish end;
a fourth passage hole formed in the third channel start end and communicated with the second passage hole;
a second groove formed in the third channel finish end; and
a fifth passage hole communicated with the first passage hole.

15. The reformer for a fuel cell system of claim 14, wherein the fourth reactor includes:
a fourth body;
a fourth channel formed on an upper surface of the fourth body and having a fourth channel start end and a fourth channel finish end;
a seventh passage hole formed in the fourth channel start end and communicated with the fifth passage hole; and
a sixth passage hole formed in the fourth channel finish end and communicated with the second groove.

16. The reformer for a fuel cell system of claim 9, wherein the fifth reactor includes:
a fifth body;
a fifth channel formed on an upper surface of the fifth body and having a fifth channel start end and a fifth channel finish end;
an intake hole formed in the fifth channel start end; and
an exhaust hole formed in the fifth channel finish end.

17. A fuel cell system comprising:
a stack for generating electrical energy by a reaction of hydrogen and oxygen; a reformer for generating hydrogen gas from fuel through a chemical catalytic reaction by thermal energy;
a fuel supply assembly for supplying fuel to the reformer; and
an air supply assembly for supplying air to the reformer and the stack,
wherein the reformer includes a plurality of reactors each having a respective channel and being stacked together

18. The fuel cell system of claim 17, wherein the reformer includes:
a thermal energy generator creating thermal energy by an oxidation catalytic reaction of fuel and air; and
a hydrogen gas generator creating hydrogen gas by receiving fuel separately from the thermal energy generator and absorbing heat created by the thermal energy generator to generate hydrogen gas.

19. The fuel cell system of claim 17, wherein the reformer includes:
a first reactor adapted to generate thermal energy by an oxidation catalytic reaction of fuel and air;
a second reactor adapted to vaporize fuel by the thermal energy generated from the first reactor;
a third reactor adapted to generate hydrogen gas by a reforming catalytic reaction of the fuel vaporized in the second reactor;
a fourth reactor adapted to perform a primary reduction of a concentration of carbon monoxide contained in the hydrogen gas; and
a fifth reactor adapted to perform a secondary reduction of a concentration of carbon monoxide contained in the hydrogen gas.

20. The fuel cell system of claim 19, wherein the respective channels of the reactors partially form one path.

21. The fuel cell system of claim 20, wherein the reactors have a respective passage holes to form the path.

22. The fuel cell system of claim 17, wherein the reactors are formed in a plate type.

23. The fuel cell system of claim 17, wherein the reactor is made of a thermal conductive material and includes a body where the channel is formed.

24. The fuel cell system of claim 23, wherein the body is made of one selected from the group consisting of aluminum, copper, and steel.

25. A reforming method for a fuel cell system, comprising:
structuring a stack of reactors such that a first reactor is positioned in the center, a third reactor and the fourth reactor are sequentially stacked adjacently on an upper side of the first reactor, and a the second reactor and a fifth reactor are sequentially stacked adjacently on a lower side of the first reactor;
supplying fuel and air to the first reactor and channeling the fuel and air through the first reactor to generate thermal energy;
pre-heating the stack of reactors by the thermal energy;
after pre-heating, channeling a fuel and water mixture through the second reactor to be evaporated in the second reactor and transmitting a vaporized fuel and water mixture to the third reactor;
channeling the vaporized fuel and water mixture through the third reactor, generating from the vaporized fuel and water mixture hydrogen gas containing carbon monoxide and supplying the hydrogen gas containing carbon monoxide to the fourth reactor;
channeling the hydrogen gas containing carbon monoxide through the fourth reactor, performing a primary reduction of carbon monoxide concentration in the hydrogen gas, and supplying hydrogen gas with an initially reduced carbon monoxide concentration to the fifth reactor; and
injecting air into the fifth reactor, channeling the hydrogen gas with reduced carbon monoxide and the air through the fifth reactor, performing a secondary reduction of carbon monoxide concentration in the hydrogen gas, and exhausting hydrogen gas with a further reduced carbon monoxide concentration.

26. The method of claim 25, wherein the thermal energy is generated by combusting fuel and air by an oxidation catalytic reaction.

27. The method of claim 25, wherein pre-heating further comprises transmitting the thermal energy generated in the first reactor to the second reactor, to the third reactor, to the fourth reactor and to the fifth reactor.

28. The method of claim 25, wherein hydrogen gas containing carbon monoxide is generated by the third reactor from the vaporized fuel and water mixture of the second reactor by a steam reforming catalytic reaction.

29. The method of claim 25, wherein performing a primary reduction is by a water-gas shift catalytic reaction of the hydrogen gas containing carbon monoxide.

30. The method of claim 25, wherein performing a secondary reduction is by a preferential carbon monoxide oxidation catalytic reaction of air and the hydrogen gas with initially reduced carbon monoxide concentration.

31. The method of claim 25, further comprising:
forming a first reactor channel catalyst layer on an inner surface of a first reactor channel for accelerating an oxidation reaction of fuel and air;
forming a second reactor channel catalyst layer on an inner surface of a second reactor channel for accelerating vaporization of the fuel and water mixture;
forming a third reactor catalyst layer on the inner surface of a third reactor channel for accelerating a reforming reaction of the vaporized fuel and water mixture;
forming a fourth reactor catalyst layer in a fourth reactor flow channel for accelerating a water-gas shift reaction; and
forming a fifth reactor catalyst layer in a fifth reactor channel for accelerating the secondary reduction of carbon monoxide concentration by a preferential carbon monoxide oxidation reaction.
